# EUROPÄISCHE PATENTSCHRIFT

(11) **EP 0 678 407 B1**
(45) Veröffentlichungstag und Bekanntmachung des Hinweises auf die Patenterteilung: **20.05.1998**
(21) Anmeldenummer: 95104162.3
(22) Anmeldetag: 22.03.1995
(51) Int. Cl.: B60G 21/055, F16C 27/06, F16F 1/38

(54) **Kunststofflager für Stabilisatoren in Kraftfahrzeugen**
Plastic bearing for stabiliser bars in motor vehicles
Palier en matière plastique pour barres stabilisatrices de véhicules automobiles

(30) Priorität: 20.04.1994 DE 4413666
(43) Veröffentlichungstag der Anmeldung: 25.10.1995
(73) Patentinhaber: LEMFÖRDER METALLWAREN AG., 49441 Lemförde (DE)
(72) Erfinder: Kammel, Helmut, D-49401 Damme (DE)

(56) Entgegenhaltungen:
- EP-A- 0 381 566
- EP-A- 0 381 945
- DE-A- 4 204 252
- FR-A- 2 657 564
- PATENT ABSTRACTS OF JAPAN vol. 017 no. 208 (M-1401) ,23.April 1993 & JP-A-04 349012 (NIPPON MEKTRON LTD) 3.Dezember 1992,
- PATENT ABSTRACTS OF JAPAN vol. 006 no. 124 (M-141) ,9.Juli 1982 & JP-A-57 051036 (TOYOTA MOTOR CORP) 25.März 1982,
- PATENT ABSTRACTS OF JAPAN vol. 014 no. 256 (M-0980) ,4.Juni 1990 & JP-A-02 072220 (KOYO SEIKO CO LTD) 12.März 1990,

## Beschreibung

Die Erfindung bezieht sich auf ein Kunststofflager für Stabilisatoren in Kraftfahrzeugen nach dem Oberbegriff des Patentanspruches 1.

Aus EP 0 381 566 A1 ist ein Drehstablager bekannt, das aus einem starren Innenteil besteht, welches seinerseits aus zwei mit einem Mantel aus elastischem Material umhüllten Halbschalen gebildet wird. An der Innenseite des Innenteiles weist dieses Drehstablager Rippen aus elastischem Material auf. Darüber hinaus ist an dem Lager eine Verschlußeinrichtung zur Verriegelung der beiden Halbschalen vorgesehen. Die Halbschalen können über ein Scharnier miteinander verbunden sein. Die Verschlußeinrichtung besteht aus einer Rippe und einer Nut, die eine komplementäre Rastverbindung bilden. Diese Rastverbindung legt das Drehstablager irreversibel an dem Drehstab fest.
Nachteilig bei dieser Lösung ist, daß die Rastverbindung einen im Vergleich zum Mantelmaterial höherfesten Werkstoff erfordert, weshalb zur Herstellung eines derartigen Lagers zwei unterschiedliche Werkstoffe miteinander kombiniert werden müssen.

Aus der DE-OS 42 04 252 ist darüber hinaus ein Kunststofflager aus einem elastisch verformbaren Werkstoff bekannt, welches in einteiliger und für die Montage aufklappbarer Ausbildung in einer Achsebene geteilt ist, wobei ein Steg beide Halbschalen an einer Längskante miteinander verbindet. Im vormontierten Zustand weisen die Längskanten der beiden Halbschalen quer zur Teilungsebene einen Abstand voneinander auf, so daß die Halbschalen erst bei der Montage durch das Gehäuse zusammengedrückt werden und den Stabilisator dann unter gegenseitiger Berührung ihrer Längskanten zentriert rohrförmig umschließen.

Ein solches Kunststofflager wird in der vormontierten Stellung der beiden Halbschalen in einer Form vulkanisiert, um bei der Montage den vorbestimmten und zentriert rohrförmigen Sitz der beiden Halbschalen auf dem Stabilisator zu erreichen. Erforderlich ist dazu ein relativ umfangreiches und kompliziertes Werkzeug.

Aufgabe der Erfindung ist es daher, eine Ausbildung eines solchen Kunststofflagers zu schaffen, welches eine einfachere Herstellung in einem vereinfachten Werkzeug ohne Beeinträchtigung der Zuverlässigkeit eines genauen Sitzes des vormontierten Lagers auf dem Stabilisator ermöglicht.

Zur Lösung dieser Aufgabe wird nach der Erfindung eine Ausbildung entsprechend dem Patentanspruch 1 vorgeschlagen.

Diese Ausbildung ermöglicht eine Herstellung des Kunststofflagers in einteiliger Bauweise in einer um 180° gegeneinander aufgeklappten Lage und gewährleistet einen konzentriert rohrförmigen Sitz des Kunststofflagers auf dem Stabilisator nach der Montage. Die Herstellung des Kunststofflagers erfolgt also in einer aufgeklappten Stellung, in der die Teilungsebene beider Halbschalen etwa in einer gemeinsamen Hilfsebene liegt. Gegenüber herkömmlichen Kunststofflagern kann ein solches Kunststofflager in einem wesentlich vereinfachten Werkzeug ausvulkanisiert werden. Der Vorgang der Entformung nach dem Ausvulkanisieren und der Beschickung des Formwerkzeuges werden vereinfacht. Bei der Montage kommen die Führungselemente an den beiden Halbschalen in eine gegenseitige Berührung und sorgen auf dem letzten Weg der Zusammenführung beider Halbschalen für einen paßgenauen, zentriert rohrförmigen Sitz des Kunststofflagers auf dem Stabilisator. Vorzugsweise sind an den Führungselementen Schrägflächen ausgebildet, die den paßgenauen rohrförmigen Sitz beim Zusammenklappen der beiden Halbschalen zwangsläufig herbeiführen. Bei einer bevorzugten Ausbildung des Erfindungsgedankens sind die Schrägflächen an komplementären Vorsprüngen beider Halbschalen ausgebildet, wobei diese Vorsprünge beim Zusammenklappen der beiden Halbschalen sich gegenseitig behindern und nur unter elastischer Verformung der Stege in die dann durch Materialspannung fixierte Einbaulage verbringbar sind. Dadurch wird die Montage erleichtert und sichergestellt, daß das Kunststofflager bei der Montage sicher in die vorbestimmte Endlage gelangt und dann auch in dieser Endlage verbleibt. Außerdem sind falsch montierte Lager optisch leicht zu erkennen.

Ein Ausführungsbeispiel der Erfindung ist in der Zeichnung dargestellt. Es zeigen:
- Figur 1: eine Seitenansicht eines aufgeklappt dargestellten Kunststofflagers
- Figur 2: einen Längsschnitt eines Kunststofflagers in einer Achsebene vor dem Einbau in ein das Kunststofflager umschließendes Gehäuse und
- Figur 3: einen Querschnitt nach der Linie III - III in Figur 2.

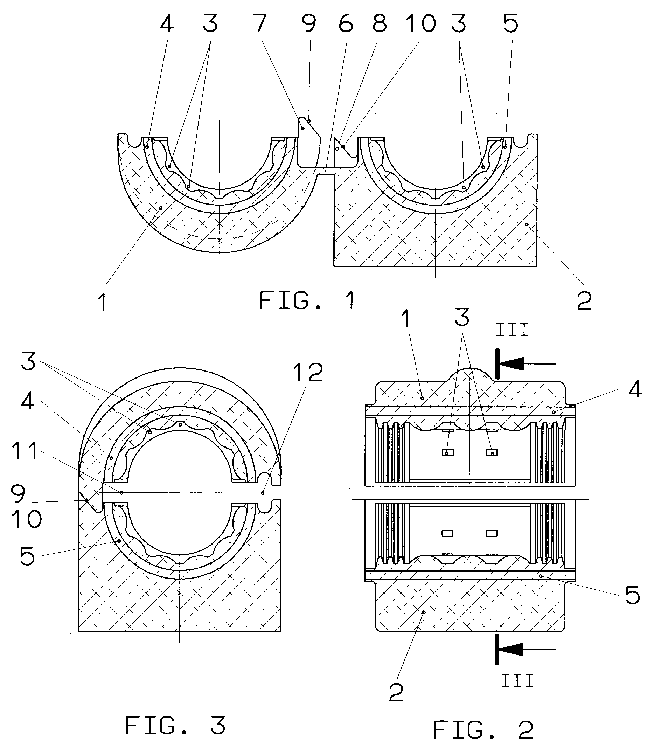

Das Kunststofflager mit den Erfindungsmerkmalen besteht aus zwei Halbschalen 1 und 2, die einteilig bzw. einstückig aus einem elastomeren Werkstoff in einem dazu geeigneten Formwerkzeug in der entsprechend Figur 1 aufgeklappten Stellung ausvulkanisiert sind. Die Gleitfläche an der Innenseite der beiden Halbschalen weist Taschen 3 zur Aufnahme eines Schmiermittels auf. Innerhalb des Werkstoffes beider Halbschalen 1 und 2 sind schalenförmige Versteifungseinlagen 4 und 5 aus Blech, härterem Kunststoff oder dergleichen vorgesehen. An einer Längskante sind beide Halbschalen 1 und 2 durch einen oder gegebenenfalls durch mehrere Stege 6 miteinander verbunden. Für die paßgenaue Zusammenführung der beiden Halbschalen 1 und 2 beim Zusammenklappen in eine Zwischenmontagestellung gemäß Figuren 2 und 3 sind an den beiden benachbarten Längskanten der Halbschalen 1 und 2 Führungselemente 7 und 8 in Form von Vorsprüngen angeordnet, die die Halbschalen beim Zusammenklappen in die präzise Zwischenmontagestellung führen. Dazu sind an den Vorsprüngen Schrägflächen 9 und 10 ausgebildet, die beim Zusammenklappen der Halbschalen 1 und 2 zur gegenseitigen Anlage kommen und die Halbschalen auf dem letzten Wegstück der Klappbewegung in die exakte Zwischenmontageposition führen, die besonders aus der Figur 3 erkennbar ist. Die beiden Halbschalen werden sodann durch das Gehäuse zusammengedrückt, bis die zuvor einander gegenüberliegenden Längskanten beider Halbschalen, und vor allem der Versteifungseinlagen, sich gegenseitig berühren und den Stabilisator rohrförmig konzentriert umschließen. Zur Fixierung der in den Figuren 2 und 3 dargestellten Zwischenmontageposition ist bei einer besonderen Ausbildung nach der Erfindung vorgesehen, daß die Schrägflächen an komplementären Vorsprüngen beider Halbschalen ausgebildet sind, die beim Gegeneinanderklappen der beiden Halbschalen sich gegenseitig behindern und nur unter elastischer Verformung des Steges 6 in die dann durch Materialspannung fixierte Zwischeneinbaulage verbringbar sind. Der Vorsprung 7 kann nur mit einem gedehnten Steg 6 über den Vorsprung 8 hinweggehoben werden, so daß die Materialspannung des Steges 6 die beiden Halbschalen in der Zwischenmontageposition gemäß Figuren 2 und 3 festhält. Erreicht wird dadurch gleichzeitig eine Erleichterung bei der optischen Überprüfung der richtigen Montageposition. Durch eine Veränderung des Querschnittes des Steges 6 läßt sich die Vorspannkraft verändern, die bei der Vormontage des Kunststofflagers zu überwinden ist und die die beiden Schalenhälften nach dem Zusammenklappen in die in Figur 2 dargestellte Position zusammenhält. Diese Vorspannkraft kann somit an unterschiedliche Gegebenheiten angepaßt und entsprechend vergrößert oder verkleinert werden. Es kann ein Steg 6 oder es können auch mehrere Stege 6 vorgesehen sein. Eine andere Variante besteht darin, daß an jedem der Führungselemente 7 und 8 beidseitig einander gegenüberliegende Schrägflächen 9 und 10 ausgebildet sind, um dadurch die Sicherheit der bei der Vormontage erreichten Einschnappbewegung zu verbessern. Abweichend von den zeichnerischen Darstellungen kann in der vormontierten Posistion auch nur einer der beiden Schlitze 11 oder 12 zwischen den einander gegenüberliegenden Kanten der beiden Schalenhälften offen und der andere Schlitz 11 oder 12 geschlossen sein, wodurch die Vorspannkraft in dem elastomeren Werkstoff bei der Einbaumontage in das Gehäuse beeinflußt werden kann.

## Patentansprüche

1. Kunststofflager für Stabilisatoren in Kraftfahrzeugen, bestehend aus zwei an einer Längsseite durch Stege einstückig miteinander verbundenen, aufklappbaren Halbschalen, deren Längsränder sich im montierten Zustand gegenseitig berühren,
dadurch gekennzeichnet, daß
die beiden Halbschalen (1,2) an der Seite ihrer Stegverbindung (6) je eines von zwei Führungselementen (7,8) aufweisen, die aus Schrägflächen (9,10) an komplementären Vorsprüngen beider Halbschalen (1,2) bestehen, die sich beim Gegeneinanderklappen der beiden Halbschalen (1,2) gegenseitig behindern und nur unter elastischer Verformung des Steges (6) in die dann durch Materialspannung fixierte Einbaulage verbringbar sind und somit die Halbschalen (1,2) bei der Montage in die vorbestimmte Verschlußlage führen.

2. Kunststofflager nach Anspruch 1,
dadurch gekennzeichnet, daß
an jedem der Führungselemente (7,8) beidseitig einander gegenüberliegende Schrägflächen (9,10) ausgebildet sind.

## Claims

1. Plastic mounting for stabilisers in motor vehicles, consisting of two half shells which are integrally connected to one another by webs on one longitudinal side, can be folded open and of which the longitudinal edges touch one another in the assembled state,
characterised in that
the two half shells (1, 2) each have, on the side with the web connection (6), one of two guide elements (7, 8) which consist of oblique faces (9, 10) on complementary projections of the two half shells (1, 2) which obstruct one another when the two half shells (1, 2) are folded against one another and can be brought into the fitting position then fixed by material tension only by elastic deformation of the web (6) and therefore guide the half shells (1, 2) into the predetermined closed position during assembly.

2. Plastic mounting according to claim 1,
characterised in that
mutually opposed oblique faces (9, 10) are formed on each of the guide elements (7, 8).

## Revendications

1. Palier en matière plastique pour barres stabilisatrices de véhicules automobiles, constitué de deux demi-coquilles pouvant s'ouvrir, reliées entre elles d'une seule pièce, par des entretoises, dont les bords longitudinaux se touchent réciproquement à l'état monté, caractérisé en ce que les deux demi-coquilles (1, 2) présentent chacune, sur le côté de leur assemblage par entretoise (6), un parmi deux éléments de guidage (7, 8), qui sont constitués de surfaces obliques (9, 10) sur des saillies complémentaires des deux demi-coquilles (1, 2), qui se gênent l'une l'autre lors de la fermeture l'une contre l'autre des deux demi-coquilles (1, 2) et qui ne peuvent être amenées, que par déformation élastique de l'entretoise (6), dans la position de montage fixée alors par contrainte de matière et amènent ainsi les demi-coquilles (1, 2) lors du montage dans la position de fermeture prédéterminée.

2. Palier en matière plastique selon la revendication 1, caractérisé en ce que sur chacun des éléments de guidage (7, 8), sont formées des deux côtés, des surfaces obliques (9, 10) opposées l'une à l'autre.
